# EUROPEAN PATENT APPLICATION

(11) **EP 2 147 896 A1**
(43) Date of publication of application: **27.01.2010**
(21) Application number: 08013158.4
(22) Date of filing: 22.07.2008
(51) Int. Cl.: C01B 3/02, C01B 3/34, F01K 23/06, F22G 1/00

(54) **Low energy process for the production of ammonia or methanol**

(71) Applicant: Uhde GmbH, 44141 Dortmund (DE)
(72) Inventor: Lippmann, Dennis, 44267 Dortmund (DE); Johanning, Joachim, 46045 Oberhausen (DE)

(57) **Abstract**

Process for utilizing synthesis gas heat for the generation of supercritical steam in a low energy ammonia or methanol plant comprising a reforming or partial oxidation stage (1), at least one supercritical steam generator (3) having a shell side and a tube side, at least one superheater (14), at least one back pressure turbine (17), at least one extraction and condensing turbine (23), at least one boiler feedwater pump (7). The synthesized synthesis gas (2) is sent to the shell side of the supercritical steam generator (3), the supercritical steam generator (3) is fed with pressurized feedwater (4), the feedwater flow is adjusted to maintain the steam temperature at the exit of the supercritical steam generator in the range of 375-500 °C (13), the supercritical steam is generated in the supercritical steam generator at a pressure of 225-450 bar, the supercritical steam (13) is further heated in a superheater (14) to a temperature of 500 - 750 °C, and the supercritical steam generated in the superheater is fed to a back pressure turbine (17).

## Description

The invention relates to a process for utilizing synthesis gas heat for the generation of supercritical steam in a low energy ammonia or methanol plant and to the apparatus suitable for operating that process, hereby achieving energy savings and overall cost advantages, i.e. better process economics. In particular, the invention integrates a method for the generation of supercritical steam in a way which will prevent metal dusting corrosion on the tubes of the steam generator. The temperature of the supercritical steam is getting controlled and kept constant by the adjustment of the feedwater flow to the supercritical steam generator.

Synthesis gases contain different amounts of carbon monoxide, carbon dioxide and hydrogen. They are generated either out of coal, heavy fuel oil or similar feedstocks by gasification or via steam reforming of hydrocarbon fuels such as natural gas or naphtha. Synthesis gases are used for example as intermediates for the production of methanol or ammonia in industry.

Synthesis gas production can be realized in several ways utilising the two basic steps partial oxidation and steam reforming either separately or in sequence. The most widely used method is the combination of the endothermic steam reforming reaction in a primary reformer followed by the exothermal partial oxidation plus again an endothermic reforming reaction step in a secondary reformer. Also, process schemes partly bypassing the endothermic reforming step have been proposed. The reforming steps are carried out over special catalysts. Further, entirely endothermal steam reforming without a secondary reforming step as well as entirely autothermal reforming, i.e. exothermal partial oxidation plus an endothermic reforming reaction step in a vessel similar to a secondary reformer are feasible options. All these syngas production schemes can be combined with an adiabatic prereformer as the first step to convert higher hydrocarbons in the feed to CH₄, H₂, CO and CO₂ and thus prevent soot formation on the catalyst. Also, so called partial oxidation (POX-) reactors without catalyst can be used. The use of reactors containing oxygen transport membranes combine the production of oxygen and syngas in one vessel, thus eliminating separate oxygen generation and therefore saving both investment and operating costs as described in DE102004049076A1.

The energy consumption of ammonia and methanol plants is fairly high due to the energy requirements of the reforming reaction to generate the synthesis gas and the compression energy required for the ammonia or methanol synthesis at elevated pressures. The waste heat from the reforming section in ammonia or methanol plants is used to generate steam which is utilized in the turbines of the compressor drives according to the Clausius-Rankine cycle. The conventional steam systems usually employ the following three expensive pieces of equipment in this section: a boiler with the higher steam cycle pressure on the shell side and a steam drum plus a steam superheater. Due to the insufficient metal dusting corrosion resistance of all known materials full superheating of the steam is not possible in the process gas line. Hence, at least one additional superheater utilizing flue gas heat from either a reformer waste gas section or a fired heater has to be positioned in the steam line to achieve reasonable thermodynamic efficiency.

Besides utilizing the heat from the reforming section also other process heat sources are utilized for the preheating of various process and utility streams, hereby, state of the art technology already realizes a very high degree of heat integration in ammonia or methanol plants making significant further improvements a challenging task. However, in times of ever increasing energy prices it is very important to further increase the efficiency of such a process to an optimum.

Utilization of higher steam parameters as used in power plants would lead to such an improvement according to Cannot's law. However, the layout of the steam system for synthesis gas processes is quite different from a power plant and the sources of heat for steam raising and superheating are also different. When heating a steam generator or superheater with process gas with a high CO content as in synthesis gas, the critical issue is avoidance of metal dusting corrosion. In conventional synthesis gas plants the boiler is operated at an evaporation temperature in the two phase regime below the critical temperature of water. The efficient cooling of the tubes under this operating condition keeps the tube wall temperatures at low levels, thus preventing metal dusting corrosion. This issue is obviously not relevant for fired boilers at power plants with low CO partial pressures in the flue gas.

Common practice in modem ammonia or methanol plants is that each compressor is driven by its own single casing steam turbine. The turbines are specifically designed to run at relatively high speed, thus eliminating the necessity of gearboxes, at least for the low-pressure casings of the compressors. As the mechanical outputs of the turbines have to match the power demands of the individual compressors, their respective steam consumptions are thus also specified.

The steam systems further have to provide process steam to the reformers at appropriate pressure levels. These typically medium pressure levels are fixed by the operating pressures of the respective synthesis gas preparation sections. To provide the amounts of steam required, usually steam is extracted from the larger turbines at the respective pressure levels. These extraction capabilities complicate turbine design and lead to comparatively expensive machines in common plants.

The object of the invention therefore is to provide a process which is both energy saving and cost-effective and which integrates a method for the generation of supercritical steam of the optimum temperature and pressure, enabling the problems of metal dusting corrosion of the steam generator tubes to be circumvented as described above. It is also the object of the invention to provide the apparatus suitable for operating such a process.

This is achieved by a process for utilizing synthesis gas heat for the generation of supercritical steam in a low-energy ammonia or methanol plant comprising a reforming or partial oxidation stage, at least one steam generator, at least one superheater, at least one back pressure turbine, at least one extraction and condensing turbine, and at least one boiler feedwater pump. In this process synthesis gas is synthesized in the reforming or partial oxidation stage and a supercritical steam generator is used for heat recovery. In this process the synthesized synthesis gas is sent to the shell side of the supercritical steam generator, the supercritical steam generator is fed with pressurized feedwater, the feedwater flow is adjusted to maintain the steam temperature at the exit of the supercritical steam generator in the range of 375 - 500 °C to prevent the onset of metal dusting corrosion the exact temperature value depending on the composition of the process gas and the steam generator design, the supercritical steam is generated in the supercritical steam generator at a pressure of 225 - 400 bar, the supercritical steam is further heated in a superheater to a temperature of 500 - 650 °C, and the supercritical steam exiting the superheater is fed to a back pressure turbine.

Optionally, the reforming or partial oxidation stage where the synthesis gas is produced is selected from a group comprising a primary reformer, a primary and secondary reformer combination, a gas-heated reformer, an autothermal reformer, a partial oxidation chamber, a membrane reactor with oxygen transport membranes, a catalytic POx, or a combination of these.

Further options relate to the supercritical steam generator. The inlet temperature on the process side is recommended to be in the range of 550 - 1100 °C and depends on the nature of the reforming or partial oxidation stage installed in the plant. Since a definite amount of heat is provided by the process gas, both feedwater flowrate and inlet temperature to the steam generator determine the critical steam outlet temperature. The temperature of the supercritical steam leaving the supercritical steam generator is kept constant and can be optionally adjusted via a speed-controllable feedwater pump. Unlike prior art where only subcritical steam parameters are implemented, the higher temperature and pressure of supercritical steam allow for a higher efficiency according to the Carnot cycle.

Further embodiments according to the present invention are related to the back pressure turbine that extracts thermal energy from the pressurized steam and converts it into mechanical work. The process can be designed in a way that the back pressure turbine is the sole driver of either the process air compressor or the synthesis gas compressor. The supercritical steam is reduced to a steam pressure level of 100 - 130 bar in the back pressure turbine, then it is mixed with saturated high-pressure steam produced by a steam boiler in the ammonia and methanol synthesis section and is further superheated. This steam is then fed to a conventional high pressure steam turbine with medium pressure steam extraction and condensing part.
Alternatively, the outlet pressure level of the back pressure turbine can be identical to the regular medium pressure steam level. Usually the regular medium pressure steam level is somewhat higher than the process pressure level of the synthesis gas generation to be able to provide steam to the process.
Also, the outlet pressure level of the back pressure turbine does not necessarily have to be equal to the regular medium pressure steam level of the plant but can be positioned between the high pressure pressure steam level and the medium pressure steam level. This way, a higher pressure synthesis gas generation can be supplied with steam in an economic way without affecting the regular medium pressure steam level for other turbines.

The described process for utilizing synthesis gas heat for the generation of supercritical steam in a low energy ammonia or methanol plant is to be operated in a set of apparatus comprising a reforming or partial oxidation stage, at least one supercritical steam generator, at least one superheater for supercritical steam, a temperature measuring device downstream of the supercritical steam generator, at least one back pressure turbine, at least one extraction and condensing turbine, at least one boiler feedwater pump, a means for feeding the synthesized synthesis gas to the shell side of the supercritical steam generator, a means for conveying the pressurized feedwater to the supercritical steam generator, a means for adjusting the feedwater flow to keep a constant supercritical steam temperature at the exit of the supercritical steam generator, a means for conveying the supercritical steam produced in the supercritical steam generator to a superheater, and a means for conveying the superheated steam to a back pressure turbine.

A further option of the apparatus is that the supercritical steam generator is designed with a vertical tube bundle.

A further option of the apparatus is that it additionally comprises a means for connecting the temperature measuring device to a speed-controllable feedwater pump.

A further option of the apparatus is that it comprises a superheater upstream of the back pressure turbine which is located in the convection section of the primary reformer or as an alternative in a fired heater.

An alternative option of the apparatus is that it comprises a superheater located upstream of the extraction and condensing turbine which is designed as a reformer convection section or a fired heater coil.

An alternative option of the apparatus is that it additionally comprises a means for combining the saturated high pressure steam coming from a steam boiler in the synthesis section with the steam out of the back pressure turbine and conveying the joint flow to a common superheater.

A further option of the apparatus is that it comprises a means for combining the steam flow from the back pressure turbine and the steam extracted from the extraction and condensing turbine.

A further option of the apparatus is that it comprises a supercritical steam generator in the synthesis gas line that is on the steam side as well as on the synthesis gas side followed by a supercritical steam generator.

A further option of the apparatus is that it comprises a high temperature CO-shift converter that is arranged between the supercritical team generator and the supercritical team superheater in the synthesis gas line.

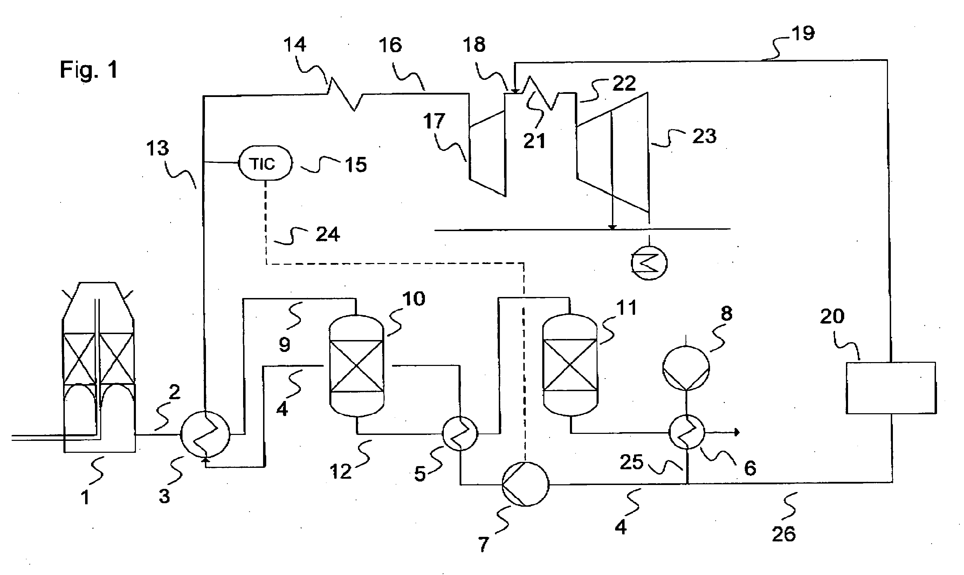

In the following, the invention is described in more detail by way of example and is illustrated in 4 figures summarizing the underlying issues. Figs. 1 to 4 show block diagrams exemplifying different ways of employing the described process for utilizing synthesis gas heat for the generation of supercritical steam in a low energy ammonia or methanol plant.

The block diagram in Fig. 1 shows a reforming or partial oxidation stage (1) in which synthesis gas is produced. This stage is selected from a group comprising a primary reformer, a primary and secondary reformer combination, a gas-heated reformer, an autothermal reformer, a partial oxidation chamber, a membrane reactor with oxygen transport membranes, a catalytic POX, or a combination of these. The generated synthesis gas (2) is conveyed to the shell side of a supercritical steam generator (3). The feedwater flow (4) is preheated (5, 6) and pressurized (7, 8) before entering the supercritical steam generator (3). The gas (9) leaving the supercritical steam generator 1 is further processed in one or more CO-shift units (10, 11). Thereby, heating of the preheaters (5, 6) is achieved by using the waste heat (12, 30) of the CO-shift reactors (10, 11). The generated supercritical steam (13) is sent to a superheater (14) that is located in the convection section of the primary reformer or in a fired heater. The temperature of the supercritical steam is controlled via a temperature measuring device (15) that is connected to a speed-controllable feedwater pump (7) to adjust the feedwater flow (4) of the supercritical steam generator (3) in order to keep the supercritical steam temperature at a constant level. The further heated supercritical steam (16) from the superheater (14) is fed to a back pressure turbine (17). The expanded steam (18) from the back pressure turbine (17) is mixed with saturated high pressure steam (19) produced by a steam boiler in the ammonia or methanol synthesis section (20) and is further superheated in a superheater (21). This superheater (21) can be designed as a reformer convection section or a fired heater coil. The superheated steam (22) is then fed into an extraction and condensing turbine (23).

The invention allows many ways of utilising the process. For example, a connection (24) may serve to control the supercritical steam temperature by adjusting the flow of the feedwater (4) of the supercritical steam generator (3) automatically but it may also be omitted and the flow of the feedwater is controlled by other means. Also an option is to divide the feedwater flow into two parts. Part 1 is sent to the synthesis section and part 2 (4) is used to feed the supercritical steam generator with feedwater which can be further pressurized (7) and preheated (5) before entering the supercritical steam generator (3).

Fig. 1 shows a process configuration in which the saturated high pressure steam (19) coming from a steam boiler in the synthesis section (20) is combined with the steam (18) generated in the back pressure turbine (17) and the joint flow is conveyed to a common superheater (21). Depending on the available heat in the convection section of the primary reformer the process can also be configured in a way that only one of the streams (18) and (19) is superheated in a reformer convection coil while the other one is superheated in a fired heater coil and both streams are then combined after being superheated individually.

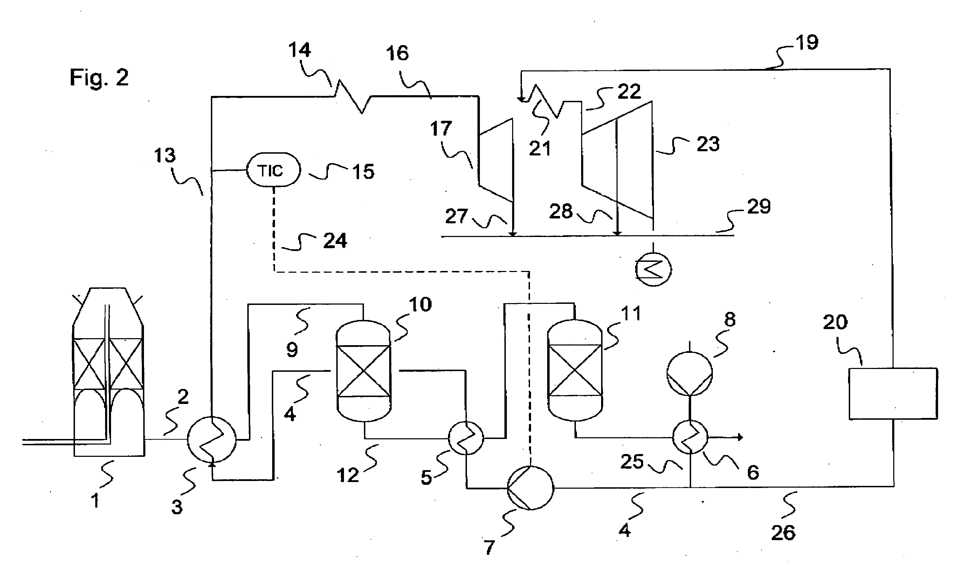

Fig. 2 shows a variation of this process where the saturated high pressure steam (19) coming from a steam boiler in the synthesis section (20) is heated in the superheater (21) and fed into the extraction and condensing turbine (23). The supercritical steam (16) is fed into the back pressure turbine (17) where it is expanded. The steam outlet of the back pressure turbine (27) and the extraction steam (28) of the extraction and condensing turbine are combined (29) for further application.

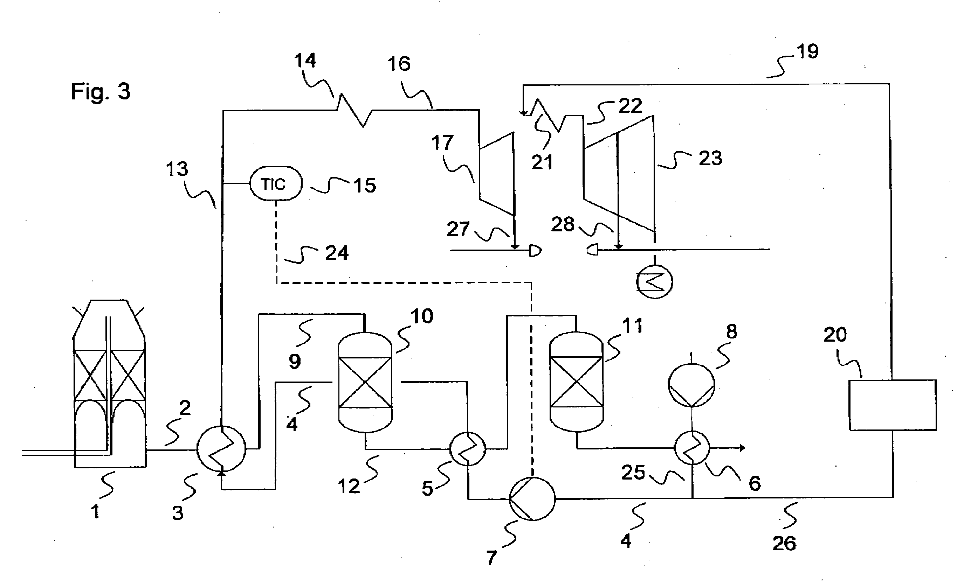

Fig. 3 shows an additional variation of the processes described in Figs. 1 and 2. The process described in Fig. 3 is equal to the one outlined in Fig. 2 up to the point where it comes to the combination of the resulting streams out from the back pressure turbine (27) and from the extraction and condensing turbine (28). In the process variation shown in Fig. 3 these two streams (27, 28) remain separately. Disconnecting the back pressure level (27) from the regular medium pressure steam level (29) allows a different operating pressure of the reforming or partial oxidation stage (1), e. g. for high pressure steam reforming or high pressure autothermal reforming. Thereby, the high efficiency of the extraction and condensing turbine (23) and other turbines operating on the medium pressure steam level (29) is retained despite the higher process steam pressure.

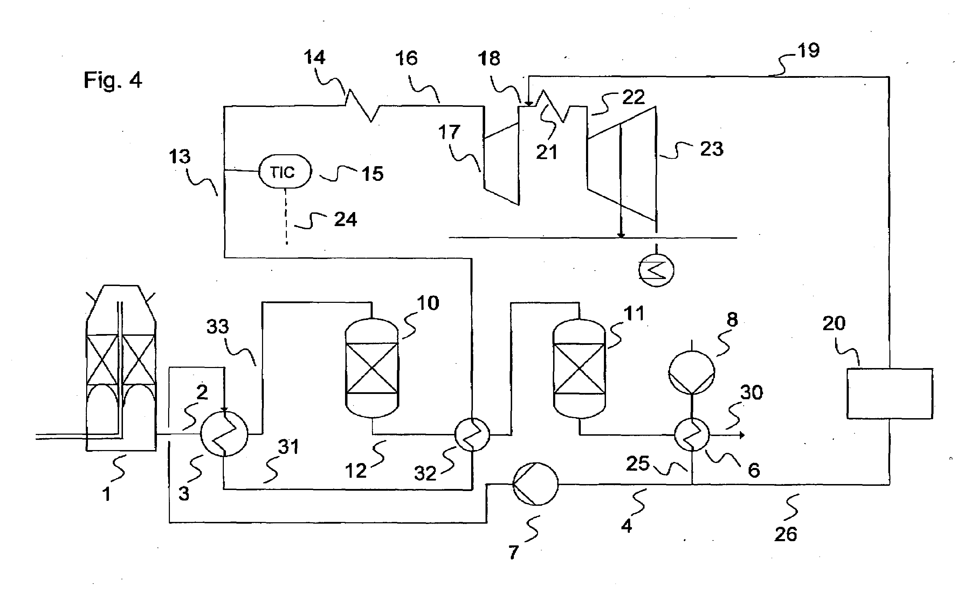

The process variations presented in Figs. 1 to 3 represent plant concepts which are designated for maximum power generation. The plants are not balanced with respect to their own power demands, i.e. will have considerable steam export. This is not always desirable as there are many locations, where no suitable consumers are to be found in the vicinity. In such cases a balanced plant is the preferred option. Such a scheme is provided by the variation of the invention shown in Fig. 4. The generated synthesis gas (2) is again conveyed to a supercritical steam generator (3). The supercritical feedwater flow (4) is coming directly from the supercritical feedwater pump (7). The supercritical steam (31) generated in (3) is now conveyed to an additional superheater (32) in the synthesis gas line (33), where part of the superheating is conducted. The exit stream (13) then enters the usual superheater (14) for final conditioning. Thus, the amount of heat required in superheater (14) is reduced considerably. The synthesis gas (33) leaving the supercritical steam generator 1 (3) is passed on to the superheater (32). Optionally, the high temperature CO-shift converter (10) can be positioned in line (33). The conversion step in this location significantly lowers the CO-content of the synthesis gas, thus reducing its metal dusting aggressiveness accordingly. This allows higher metal temperatures in superheater (32) and a higher preheating temperature for the supercritical steam (13). The process variation presented in Fig. 4 can be combined with the variations shown in Figs 1 to 3, thus offering full flexibility to adjust the steam cycle to the requirements of the process and the available heat sources.

The following examples illustrate the potential of the invented process with respect to operating cost reductions.

### Example 1

In this example the following realization of the steam system in ammonia and methanol plants are compared:
S1 Standard high pressure steam system with extraction and condensing turbines
A1 Embodiment of the invention according to Fig. 1
B1 Embodiment of the invention according to Fig. 2

The comparison is based on a combined power output of 60 MW for all turbines. This figure is in the order of todays world scale ammonia and methanol plants. Also, a steam flowrate of 120 t/h at 45 bar and 430 °C as process steam for the reforming stage is assumed. Turbine efficiencies of 80 % have been used in the calculations.

Table 1 shows further process data used in this comparison as well as the results. The table illustrates the marked difference in heat input required between the conventional steam system and the proposed new process variation utilizing the supercritical steam system. The table also lists the resulting differences in annual operating costs based on an energy price of 4 €/GJ.

| Process Parameter | Unit | S1 | A1 | B1 |
|---|---|---|---|---|
| Inlet pressure supercritical turbine | bar | - | 400 | 400 |
| Inlet temperature supercritical turbine | °C | - | 550 | 550 |
| Inlet pressure HP turbine | bar | 125 | 125 | 125 |
| Inlet temperature HP turbine | °C | 530 | 530 | 530 |
| Condensing pressure | bar | 0.50 | 0.50 | 0.50 |
| Process heat requirements | GJ | 311.6 | 266.9 | 276.7 |
| Annual operating costs | Mio €/a | 37.2 | 31.9 | 33.1 |
| Relative operating costs | [%] | 100 | 86 | 89 |

### Example 2

In this example similar realizations of the steam system in ammonia and methanol plants as in Example 1 are compared:
S2 Standard high pressure steam system with extraction and condensing turbines
A2 Embodiment of the invention according to Fig. 1
C1 Embodiment of the invention according to Fig. 3

In this case it has been assumed that a different reforming stage operating at a higher pressure is being utilised and the process steam has to be supplied at 70 bar. All other data remain the same as in Example 1.
Table 2 shows the results of this comparison.

| Process Parameter | Unit | S2 | A2 | C1 |
|---|---|---|---|---|
| Inlet pressure supercritical turbine | bar | --- | 400 | 400 |
| Inlet temperature supercritical turbine | °C | --- | 550 | 550 |
| Inlet pressure HP turbine | bar | 125 | 125 | 125 |
| Inlet temperature HP turbine | °C | 530 | 530 | 530 |
| Condensing pressure | bar | 0.50 | 0.50 | 0.50 |
| Process heat requirements | GJ | 319.4 | 273.0 | 279.7 |
| Annual operating costs | Mio €/a | 38.2 | 32.6 | 33.4 |
| Relative operating costs | [%] | 100 | 85.3 | 87.4 |

The advantages of the proposed process are:
- Higher energy efficiency of the process by applying a supercritical steam system.
- Cost-effectiveness, by the replacement of three expensive pieces of equipment comprising a steam drum, a boiler with the high pressure steam on the shell side, and a process gas heated superheater with one supercritical steam boiler having the process gas with the low pressure on the shell side.
- Savings on the steam condenser surface and cooling water consumption, due to the higher thermal efficiency of the supercritical steam system.
- Metal dusting corrosion problems which are not uncommon in conventional steam superheaters can be avoided.
- Efficient provision of process steam for high pressure reforming processes, due to the location of the back pressure turbine between the supercritical steam level and the process pressure steam level.

Key to referenced items
- 1: reforming or partial oxidation stage
- 2: synthesis gas
- 3: supercritical steam generator
- 4: feedwater flow 2
- 5: preheater 1
- 6: preheater 2
- 7: boiler feedwater pump 1
- 8: boiler feedwater pump 2
- 9: gas leaving the supercritical steam generator
- 10: CO-shift reactor 1
- 11: CO-shift reactor 2
- 12: waste heat of CO-shift reactor 1
- 13: supercritical steam
- 14: superheater
- 15: temperature controlling device
- 16: further heated supercritical steam
- 17: back pressure turbine
- 18: expanded steam out of the back pressure turbine
- 19: high pressure steam out of the methanol or ammonia synthesis section
- 20: synthesis section
- 21: superheater
- 22: superheated steam
- 23: extraction and condensing turbine
- 24: connection to link the temperature controlling device with a boiler feedwater pump
- 25: feedwater flow
- 26: feedwater flow 1
- 27: outlet stream from the back pressure turbine
- 28: extraction steam from the extraction and condensing turbine
- 29: combination of gas stream 27 and gas stream 28
- 30: waste heat of CO-shift reactor 2
- 31: supercritical steam
- 32: supercritical steam superheater
- 33: synthesis gas

## Claims

1. Process for utilizing synthesis gas heat for the generation of supercritical steam in a low energy ammonia or methanol plant comprising
• a reforming or partial oxidation stage,
• at least one steam generator,
• at least one superheater,
• at least one back pressure turbine,
• at least one extraction and condensing turbine,
• at least one boiler feedwater pump
where
• synthesis gas is synthesized in a reforming or partial oxidation stage,
**characterized in that**
• a supercritical steam generator having a shell side and a tube side is used for heat recovery,
• the synthesized synthesis gas is sent to the shell side of the supercritical steam generator,
• the supercritical steam generator is fed with pressurized feedwater,
• the feedwater flow is adjusted to maintain the steam temperature at the exit of the supercritical steam generator in the range of 375 - 500°C,
• the supercritical steam is generated in the supercritical steam generator at a pressure of 225 - 450 bar,
• the supercritical steam is further heated in a superheater to a temperature of 500 - 750 °C, and
• the supercritical steam generated in the superheater is fed to a back pressure turbine.

2. Process according to claim 1, **characterized in that** the reforming or partial oxidation stage where the synthesis gas is produced is selected from a group comprising a primary reformer, a primary and secondary reformer combination, a gas-heated reformer, an autothermal reformer, a partial oxidation chamber, a membrane reactor with oxygen transport membranes, a catalytic POX, or a combination of these.

3. Process according to claim 1 or 2, **characterized in that** the Inlet temperature on the process side of the supercritical steam generator is in the range of 550 - 1100 °C.

4. Process according to any preceding claim, **characterized In that** the temperature of the supercritical steam leaving the supercritical steam generator is kept constant via a speed-controllable feedwater pump.

5. Process according to any preceding claim, **characterized in that** the back pressure turbine is the sole driver of either the process air compressor or the synthesis gas compressor.

6. Process according to any preceding claim, **characterized in that** the supercritical steam is reduced to a steam level of 100 -130 bar in the back pressure turbine.

7. Process according to any preceding claim, **characterized in that** the supercritical steam out of the back pressure turbine is mixed with saturated steam produced by a steam boiler in the ammonia or methanol synthesis section and is then further superheated.

8. Process according to any preceding claim, **characterized in that** the outlet steam of the back pressure turbine is fed into an extraction and condensing turbine after further superheating.

9. Process according to any preceding claim, **characterized in that** the outlet pressure level of the back pressure turbine is independent from the steam pressure level defined by the extraction from the extraction and condensing turbine.

10. Process according to any of preceding claim, **characterized In that** the outlet pressure level of the back pressure turbine is positioned between the supercritical steam pressure level and the process steam pressure level.

11. Apparatus for utilizing synthesis gas heat for the generation of supercritical steam in an ammonia or methanol plant suitable for operating a process according to claim 1, comprising
• a reforming or partial oxidation stage,
• at least one supercritical steam generator,
• at least one superheater for supercritical steam,
• a temperature measuring device downstream of the supercritical steam generator,
• at least one back pressure turbine,
• at least one extraction and condensing turbine,
• at least one boiler feedwater pump,
• a means for feeding the synthesized synthesis gas to the shell side of the supercritical steam generator,
• a means for conveying the pressurized feedwater to the supercritical steam generator,
• a means for adjusting the feedwater flow to keep a constant supercritical steam temperature at the exit of the supercritical steam generator,
• a means for conveying the supercritical steam produced in the supercritical steam generator to a superheater, and
• a means for conveying the superheated steam to a back pressure turbine.

12. Apparatus according to claim 11 comprising a supercritical steam generator which is designed with a vertical tube bundle.

13. Apparatus according to any of claims 11 or 12 comprising a means for connecting the temperature measuring device to a speed-controllable feedwater pump.

14. Apparatus according to any of claims 11 to 13 comprising a superheater upstream of the back pressure turbine which is being located in the convection section of the primary reformer.

15. Apparatus according to any of claims 11 to 13 comprising a superheater upstream of the back pressure turbine which is being located in a fired heater.

16. Apparatus according to any of claims 11 to 15 comprising a superheater located upstream of the extraction and condensing turbine which is realized as a reformer convection section or a fired heater coil.

17. Apparatus according to any of claims 11 to 16 comprising a means for combining the saturated steam coming from a steam boiler in the synthesis section with the steam from the back pressure turbine and conveying the joint flow to a common superheater.

18. Apparatus according to any of claims 11 to 16 comprising a means for combining the steam flow from the back pressure turbine and the steam extracted from the extraction and condensing turbine.

19. Apparatus according to any of claims 11 to 18, **characterized in that** the supercritical steam generator in the synthesis gas line is located on the steam side as well as on the synthesis gas side followed by a supercritical steam superheater.

20. Apparatus according to any of claims 11 to 19, **characterized in that** a high temperature CO-shift converter is positioned between the supercritical steam generator and the supercritical steam superheater in the synthesis gas line.
